(19) Europäisches Patentamt
European Patent Office
Office européen des brevets

(11) **EP 2 499 464 B1**

(12) **FASCICULE DE BREVET EUROPEEN**

(45) Date de publication et mention
de la délivrance du brevet:
**07.01.2015 Bulletin 2015/02**

(51) Int Cl.:
***G01D 5/14*** *(2006.01)*      ***G01D 5/245*** *(2006.01)*
***G01P 3/487*** *(2006.01)*

(21) Numéro de dépôt: **10779291.3**

(22) Date de dépôt: **05.11.2010**

(86) Numéro de dépôt international:
**PCT/EP2010/066942**

(87) Numéro de publication internationale:
**WO 2011/054940 (12.05.2011 Gazette 2011/19)**

(54) **CAPTEUR DE POSITION ANGULAIRE, ET ENSEMBLE COMPORTANT UN SYSTÈME ROTATIF ET UN TEL CAPTEUR**

WINKELSENSOR UND ANORDNUNG MIT EINEM ROTIERENDEN SYSTEM UND EINEM SOLCHEN WINKELSENSOR

ANGULAR POSITION SENSOR AND ASSEMBLY COMPRISING A ROTARY SYSTEM AND SUCH A SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2009 FR 0957908**

(43) Date de publication de la demande:
**19.09.2012 Bulletin 2012/38**

(73) Titulaire: **Sagem Défense Sécurité**
**92100 Boulogne-Billancourt (FR)**

(72) Inventeur: **PIATON, Jérôme**
**F-75015 Paris (FR)**

(74) Mandataire: **Regimbeau**
**20, rue de Chazelles**
**75847 Paris Cedex 17 (FR)**

(56) Documents cités:
**DE-A1- 4 141 000**     **FR-A5- 2 155 303**
**US-B1- 6 433 536**

## Description

DOMAINE TECHNIQUE GENERAL

La présente invention concerne un capteur destiné à être placé sur un système comportant un arbre monté en rotation par rapport à un carter et dont on veut mesurer en continu une position angulaire.

L'invention concerne également un ensemble comportant d'une part un système précité et un capteur selon l'invention.

ETAT DE L'ART

On connait de nombreux moteurs électriques, pour lesquels on souhaite pouvoir effectuer un pilotage vectoriel. Or pour effectuer le pilotage vectoriel du moteur, il faut pouvoir mesurer la position de l'axe du rotor du moteur par rapport au stator.

Les solutions actuelles pour mesurer la position de l'axe du rotor par rapport au stator utilisent des sondes de Hall, détectant l'induction magnétique B créée par des aimants du rotor.

Pour des commandes simples du moteur, par exemple une commande du type trapèze, trois sondes de Hall à sortie discrète sont suffisantes : on détecte en effet les pôles nord et sud des aimants. Ces sondes de Hall à sortie discrète ne nécessitent pas de circuit magnétique particulier.

La demande de brevet allemand DE4141000 A1 présente par exemple une méthode de mesure d'angle de rotation à partir de capteurs en au moins trois positions, qui détectent le changement périodique de signaux optiques, magnétiques ou électriques lors de la rotation.

Le brevet américain US6433536 B1 présente un appareil pour indiquer la position instantanée d'un élément mobile au moyen d'un corps magnétique positionné sur l'élément mobile et de capteurs de champ magnétique.

Mais ce principe ne permet ni un pilotage en vitesse du moteur ni un pilotage vectoriel.

PRESENTATION DE L'INVENTION

L'invention propose de pallier au moins un de ces inconvénients.

A cet effet, on propose selon l'invention un capteur selon la revendication 1.

L'invention est avantageusement complétée par les caractéristiques des revendications 2 à 5, prises seules ou en une quelconque de leur combinaison techniquement possible.

L'invention concerne également un ensemble selon la revendication 6, c'est à dire comportant d'une part un système précité et un capteur selon l'invention.

L'invention est avantageusement complétée par les caractéristiques des revendications 7 à 9, prises seules ou en une quelconque de leur combinaison techniquement possible.

L'invention présente de nombreux avantages.

L'invention permet une mesure de la position de l'axe de l'arbre en rotation par rapport au carter, en utilisant des transducteurs électriques linéaires, par exemple des sondes de Hall.

Dans la mesure où, du fait du circuit magnétique, l'induction magnétique est de forme sinusoïdale, la mesure du capteur est assez précise pour permettre un pilotage vectoriel d'un moteur.

Pour le pilotage d'un moteur multipolaire, il est possible d'installer un capteur ayant le même nombre de pôles que le moteur.

La mesure est fiable et compatible avec la durée de vie d'un moteur électrique (de l'ordre 150 000 heures).

Le capteur a avantageusement une forme de rondelle installée dans le prolongement du stator, et a un encombrement stérique faible.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

-    la figure 1 montre schématiquement un mode de réalisation possible d'un système connu comportant un arbre monté en rotation par rapport à un carter, et dont on veut mesurer en continu une position angulaire ;
-    la figure 2 montre schématiquement une coupe radiale un mode de réalisation possible d'un capteur selon l'invention ; et
-    la figure 3 montre schématiquement une coupe longitudinale d'un mode de réalisation possible d'un ensemble comportant un système et un capteur selon l'invention.

Sur l'ensemble des figures, les éléments similaires portent des références numériques identiques.

DESCRIPTION DETAILLEE

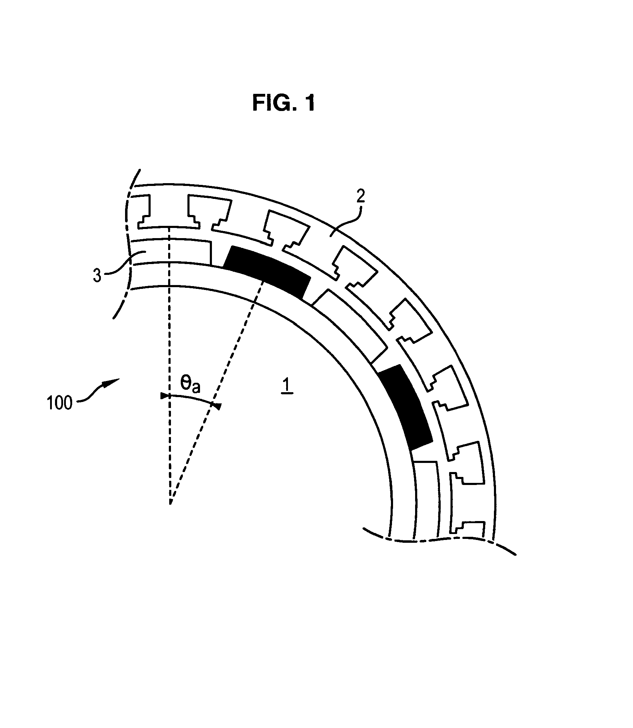

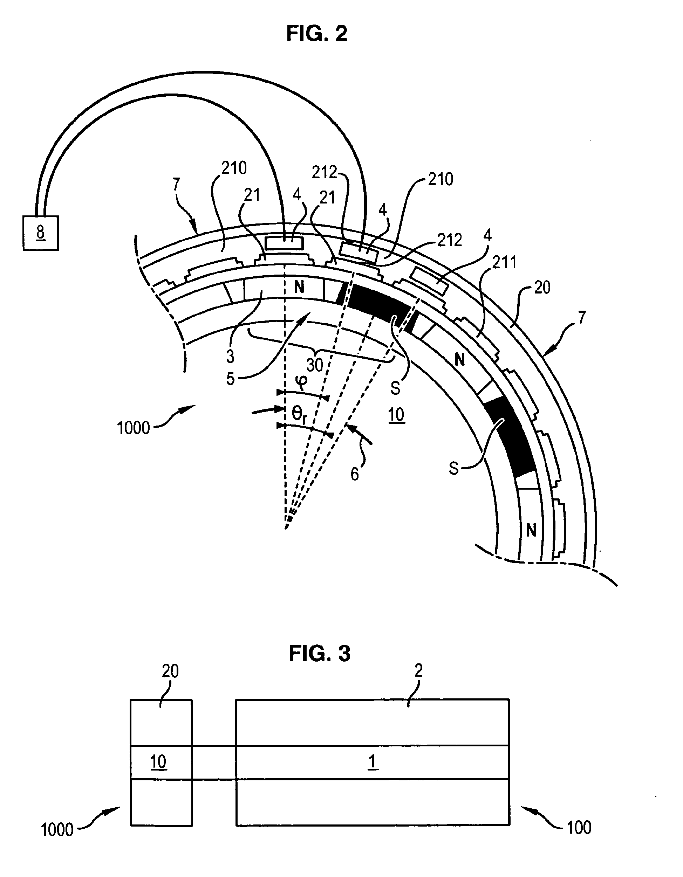

La figure 2 montre schématiquement un mode de réalisation possible d'un capteur 1000 destiné à être placé sur un système 100, connu et visible sur la figure 1.

Comme le montre la figure 1, le système 100 comporte un arbre 1 monté en rotation par rapport à un carter 2 et dont on veut mesurer en continu une position $\theta a$ angulaire.

Le capteur 1000 comporte principalement un stator 20 et un rotor 10 pour une liaison à l'arbre 1.

Comme le montre la figure 3, la liaison entre le rotor 10 et l'arbre 1 est telle que qu'une position $\theta r$ angulaire du rotor 10 par rapport au stator 20 soit la même que la position angulaire $\theta a$ de l'arbre 1 par rapport au carter 2.

Avantageusement, l'arbre 1 et le rotor 10 sont monobloc, mais le rotor 10 peut également être rapporté sur l'arbre 1 par tout moyen de fixation, comme par exemple par une coopération mécanique de pièces, par soudage ou par collage.

Sur la figure 3, l'arbre 1 en rotation est central par rapport au système 100. On comprend cependant que toute autre configuration est également possible, comme par exemple l'arbre en rotation peut être périphérique au système. Dans tous les cas, le rotor lié à l'arbre peut être central ou périphérique au capteur.

Le capteur 1000 comporte également au moins une paire 30 d'aimants 3 permanents de polarités nord, référencées classiquement par N sur les figures, et sud, référencées classiquement par S sur les figures, les polarités étant alternées dans chaque paire 30.

Sur la figure 2, les paires 30 d'aimants 3 sont situées sur le rotor 10, mais on comprend que les paires 30 d'aimants 3 peuvent également être situées sur le stator 20.

Dans tous les cas, lors de la rotation du rotor 10, chaque paire 30 crée une induction B magnétique dans le capteur 1000.

Le capteur 1000 comporte en outre classiquement un circuit 21 magnétique de canalisation de l'induction B magnétique créée par chaque paire 30 d'aimants 3.

Comme on peut le constater sur la figure 2, le circuit 21 comporte au moins deux entrefers 210, dont la fonction est explicitée plus en détails dans la suite de la présente description.

Par conception et construction, le circuit 21 est adapté pour que l'induction magnétique B soit proportionnelle à une fonction sinusoïdale de la position θr angulaire du rotor 10.

On a donc, avec la conception adaptée du circuit 21, la relation :

$$B = k \cdot \sin(\theta r) \quad \text{(EQ1)}$$

où k est une constante du circuit 21.

Le capteur 1000 comporte de plus au moins deux transducteurs 4 électriques à sortie linéaire, décalés angulairement l'un de l'autre d'un angle φ par rapport au stator 20, et placés dans chacun dans un entrefer 210 comme le montre la figure 2.

Les transducteurs 4 sont avantageusement des sondes de Hall, mais peuvent également être des magnétorésistances ou des vannes de flux.

Dans tous les cas, les transducteurs 4 délivrent chacun à leur sortie un signal U qui est fonction de l'induction magnétique B. Du fait de leur linéarité, on a la relation, en combinaison avec (EQ1) :

$$U = K \cdot B = K \cdot k \cdot \sin(\vartheta r) \quad \text{(EQ2)}$$

où K est la constante de linéarité du transducteur 4.

Les signaux en sortie des transducteurs sont délivrés à des moyens de traitement 8 comportant classiquement tous les moyens de calcul et de mémoire nécessaires.

Grâce aux au moins deux transducteurs 4 décalés, la position θr angulaire du rotor 10 par rapport au stator 20 peut être déterminée : les deux signaux sinusoïdaux en sortie des transducteurs 4 ont un déphasage correspondant au décalage angulaire φ.

Les sondes de Hall, préférentielles, sont de faible encombrement stérique. Comme le montre la figure 3, le capteur a avantageusement une forme de rondelle installée dans le prolongement du stator, et a un encombrement stérique faible.

Avantageusement, le capteur 1000 comporte trois transducteurs 4, en forme de structure triphasée, qui délivrent un réseau triphasé de signaux en leur sortie. La structure triphasée est robuste, car étant donné que deux transducteurs 4 suffisent à définir la position angulaire θr, le troisième transducteur 4 permet d'améliorer la précision et de détecter des pannes éventuelles.

Afin de concevoir le circuit 21 pour obtenir la relation (EQ1), le circuit magnétique 21 est avantageusement du type dentaire, selon l'appellation de l'homme du métier. Les types de circuit magnétique 21 donnant la relation (EQ1) sont connus de l'homme du métier.

A cet effet, le circuit 21 comporte au moins une unité 5 de mesure comportant trois dents 211 par paire 30 d'aimants 3, chaque dent 211 de l'unité comportant un entrefer 210 recevant un transducteur 4. Tout multiple de cette configuration est également possible.

D'autres configurations sont également possibles pour l'unité de mesure. Chaque unité de mesure peut ainsi comporter par exemple :

- neuf dents pour quatre paires d'aimants ; ou
- neuf dents pour cinq paires d'aimants ; ou
- douze dents pour cinq paires d'aimants.

Comme précédemment, tout multiple de chacune de ces configurations est également possible.

Il est possible de disposer des transducteurs 4 sur toute la périphérie du capteur 1000, c'est-à-dire d'avoir une unité de mesure 5 qui fait un angle de 360 °.

Cependant, il est également possible de prévoir une unité 5 de mesure sur une section 6 angulaire seulement du capteur 1000. On économise ainsi des transducteurs 4.

Cependant, dans ce cas, le circuit magnétique 21 comporte avantageusement une structure 7 dentaire présentant des entrefers 210 ne recevant pas de transducteur 4, de part et d'autre de la section 6 définissant l'unité de mesure 5, afin de garder sensiblement la même géométrie de part et d'autre des transducteurs 4, et d'obtenir en sortie de tous les transducteurs 4 des signaux identiques.

Avantageusement, chaque entrefer 210 de l'unité 5 de mesure comporte une pluralité de transducteurs 4, afin d'assurer une redondance des informations.

Préférentiellement, les faces 212 de chaque entrefer 210 sont parallèles. Dans ce cas, l'induction magnétique B est quasi uniforme, ce qui permet de s'affranchir des erreurs de position du transducteur 4 dans l'entrefer 210.

Le capteur 1000 de l'invention s'applique à tout ensemble comportant un système 100 comportant un arbre 1 monté en rotation par rapport à un carter 2, mais s'applique avantageusement à un moteur électrique synchrone à aimants. L'invention permet une mesure en continu de la position θa angulaire du moteur (du fait de la liaison entre le rotor 10 et l'arbre 1), et permet ainsi un pilotage vectoriel du moteur électrique.

Dans le cas où le moteur est un moteur multipolaire, le capteur 1000 comporte autant de paires 30 d'aimants 3 permanents de polarités N et S alternées que de pôles du moteur 100.

Dans la mesure où tous les transducteurs sont soumis à l'influence des mêmes aimants, une variation d'ensemble du niveau d'induction B ne perturbe pas l'estimation de la position, et ce que ce soit en mode diphasé, triphasé ou plus.


**Revendications**

1. Capteur (1000) destiné à être placé sur un système (100) comportant un arbre (1) monté en rotation par rapport à un carter (2) et dont on veut mesurer en continu une position (θa) angulaire,
   ledit capteur comportant

   - un stator (20) ;
   - un rotor (10) pour une liaison à l'arbre (1), de sorte qu'une position (θr) angulaire du rotor (10) par rapport au stator (20) soit la même que la position angulaire (θa) de l'arbre (1) par rapport au carter (2) ;
   - au moins une paire (30) d'aimants (3) permanents de polarités (N,S) alternées, située sur l'un ou l'autre du stator (20) et du rotor (10), et apte à créer une induction (B) magnétique lors de la rotation du rotor (10) ;
   - un circuit (21) magnétique de canalisation de l'induction (B) magnétique créée par ladite paire (30) d'aimants (3), ledit circuit (21) étant adapté pour que l'induction magnétique (B) soit proportionnelle à une fonction sinusoïdale de la position (θr) angulaire du rotor (10) ;
   - au moins deux transducteurs (4) électriques à sortie linéaire, décalés angulairement (φ) l'un de l'autre par rapport au stator (20) ;

   ledit circuit (21) comportant en outre au moins deux entrefers (210) adaptés chacun pour recevoir au moins un transducteur (4),
   ledit capteur étant **caractérisé en ce que**
   le circuit magnétique (21) est du type dentaire, et comporte au moins une unité (5) de mesure comportant trois dents (211) par paire (30) d'aimants (3), chaque dent (211) de l'unité comportant un entrefer (210) recevant un transducteur (4).

2. Capteur selon la revendication 1, comportant au moins une unité (5) de mesure sur une section (6) angulaire seulement du capteur (1000).

3. Capteur selon la revendication 2, dans lequel le circuit magnétique (21) comporte avantageusement une structure (7) dentaire présentant des entrefers (210) ne recevant pas de transducteur (4), de part et d'autre de la section (6).

4. Capteur selon l'une des revendications 1 à 3, dans lequel chaque entrefer de l'unité (5) de mesure comporte une pluralité de transducteurs (4).

5. Capteur selon l'une des revendications 1 à 4, dans lequel les faces (212) de l'entrefer (210) sont parallèles.

6. Ensemble comportant un système (100) comportant un arbre (1) monté en rotation par rapport à un carter (2),
   ledit ensemble étant **caractérisé en ce qu'**il comporte un capteur (1000) selon l'une des revendications 1 à 5.

7. Ensemble selon la revendication 6, dans lequel l'arbre (1) et le rotor (10) sont monobloc.

8. Ensemble selon l'une des revendications 6 ou 7, dans lequel le système est un moteur (100) électrique synchrone à aimants.

9. Ensemble selon la revendication 8, dans lequel le moteur est un moteur multipolaire, le capteur (1000) comportant autant de paires (30) d'aimants (3) permanents de polarités (N,S) alternées que de pôles du moteur (100).


**Patentansprüche**

1. Sensor (1000), der für die Anordnung an einem System (100) bestimmt ist, das eine Welle (1) aufweist, die relativ zu einem Gehäuse (2) drehbar gelagert ist und von der kontinuierlich eine Winkelposition (Θa) gemessen werden soll,
   wobei der Sensor Folgendes aufweist:

- einen Stator (20);
- einen Rotor (10) für die Verbindung mit der Welle (1), derart, dass eine Winkelposition (Θr) des Rotors (10) relativ zu dem Stator (20) die gleiche ist wie die Winkelposition (Θa) der Welle (1) relativ zu dem Gehäuse (2);
- mindestens ein Paar (30) Dauermagneten (3) alternierender Polaritäten (N, S), das an dem einen oder dem anderen von beiden, dem Stator (20) oder dem Rotor (10), angeordnet ist, und das dafür angepasst ist, eine magnetische Induktion (B) bei der Drehung des Rotors (10) zu erzeugen;
- eine Magnetschaltung (21) für die Leitung der magnetischen Induktion (B), die durch das Paar (30) Magneten (3) erzeugt wird, wobei die Schaltung (21) so angepasst ist, dass die magnetische Induktion (B) proportional zu einer sinusförmigen Funktion der Winkelposition (Θr) des Rotors (10) ist;
- mindestens zwei elektrische Wandler (4) mit linearem Ausgang, die relativ zu dem Stator (20) winklig (φ) zueinander versetzt sind;

wobei die Schaltung (21) ferner mindestens zwei Luftspalte (210) aufweist, die jeder für die Aufnahme mindestens eines Wandlers (4) angepasst sind, wobei der Sensor **dadurch gekennzeichnet ist, dass**
die Magnetschaltung (21) vom Zahntyp ist und mindestens eine Messeinheit (5) mit drei Zähnen (211) pro Paar (30) Magneten (3) aufweist, wobei jeder Zahn (211) der Einheit einen Luftspalt (210) für die Aufnahme eines Wandlers (4) aufweist.

2. Sensor nach Anspruch 1, der mindestens eine Einheit (5) zum Messen einer Winkelsektion (6) nur des Sensors (1000) aufweist.

3. Sensor nach Anspruch 2, wobei die Magnetschaltung (21) vorteilhafterweise eine Zahnstruktur (7) aufweist, die beiderseits der Sektion (6) Luftspalte (210) aufweist, die keinen Wandler (4) aufnehmen.

4. Sensor nach einem der Ansprüche 1 bis 3, wobei jeder Luftspalt der Messeinheit (5) eine Vielzahl von Wandlern (4) aufweist.

5. Sensor nach einem der Ansprüche 1 bis 4, wobei die Flächen (212) des Luftspalts (210) parallel sind.

6. Anordnung mit einem System (100), das eine Welle (1) aufweist, die relativ zu einem Gehäuse (2) drehbar gelagert ist,
wobei die Anordnung **dadurch gekennzeichnet ist, dass** sie einen Sensor (1000) nach einem der Ansprüche 1 bis 5 aufweist.

7. Anordnung nach Anspruch 6, wobei die Welle (1) und der Rotor (10) einstückig ausgebildet sind.

8. Anordnung nach einem der Ansprüche 6 oder 7, wobei das System ein elektrischer Synchronmotor (100) mit Magneten ist.

9. Anordnung nach Anspruch 8, wobei der Motor ein Mehrfachpolmotor ist, wobei der Sensor (1000) so viele Paare (30) von Dauermagneten (3) alternierender Polarität (N, S) wie Pole des Motors (100) aufweist.

**Claims**

1. Sensor (1000) intended to be placed on a system (100) comprising a shaft (1) rotatably mounted relative to a housing (2) and for which it is wished to measure continuously an angular position (θa), said sensor comprising

    - a stator (20);
    - a rotor (10) for a connection to the shaft (1), such that an angular position (θr) of the rotor (10) relative to the stator (20) is the same as the angular position (θa) of the shaft (1) relative to the housing (2) ;
    - at least one pair (30) of permanent magnets (3) of alternating polarities (N, S), located on one or the other of the stator (20) and the rotor (10), and capable of creating a magnetic induction (B) during the rotation of the rotor (10);
    - a magnetic circuit (21) for channelling said magnetic induction (B) created by said pair (30) of magnets (3), said circuit (21) being adapted such that the magnetic induction (B) is proportional to a sinusoidal function of the angular position (θr) of the rotor (10);
    - at least two electric transducers (4) having linear output, angularly offset (φ) to each other relative to the stator (20);

said circuit (21) further comprising at least two gaps (210) each adapted to take at least one transducer (4),
said sensor being **characterised in that**
the magnetic circuit (21) is toothed, and comprises at least one measuring unit (5) comprising three teeth (211) per pair (30) of magnets (3), each tooth (211) of the unit comprising a gap (210) taking a transducer (4).

2. Sensor according to claim 1, comprising at least one measuring unit (5) on an angular section (6) only of the sensor (1000).

3. Sensor according to claim 2, in which the magnetic circuit (21) advantageously comprises a toothed structure (7) having gaps (210) not taking a transducer (4), on either side of the section (6).

4. Sensor according to one of claims 1 to 3, in which each gap of the measuring unit (5) comprises a plurality of transducers (4).

5. Sensor according to one of claims 1 to 4, in which the faces (212) of the gap (210) are parallel.

6. Assembly comprising a system (100) comprising a shaft (1) rotatably mounted relative to a housing (2), said assembly being **characterised in that** it comprises a sensor (1000) according to one of claims 1 to 5.

7. Assembly according to claim 6, in which the shaft (1) and the rotor (10) are one piece.

8. Assembly according to one of claims 6 or 7, in which the system is a magnet synchronous electric motor (100).

9. Assembly according to claim 8, in which the motor is a multipolar motor, the sensor (1000) comprising as many pairs (30) of permanent magnets (3) of alternating polarities (N, S) as poles of the motor (100).

## FIG. 1

# FIG. 2

# FIG. 3

**EP 2 499 464 B1**

## RÉFÉRENCES CITÉES DANS LA DESCRIPTION

**Documents brevets cités dans la description**

- DE 4141000 A1
- US 6433536 B1